# EUROPÄISCHE PATENTSCHRIFT

(11) **EP 3 360 447 B1**
(45) Veröffentlichungstag und Bekanntmachung des Hinweises auf die Patenterteilung: **16.06.2021**
(21) Anmeldenummer: 18156270.3
(22) Anmeldetag: 12.02.2018
(51) Int. Cl.: A47G 19/02, F28D 20/00, F28D 20/02

(54) **DOPPELWANDIGER SPEISETELLER MIT PCM**
DOUBLE-WALLED FOOD PLATE WITH PCM
ASSIETTE PLATE À DOUBLE PAROI COMPRENANT UN MATÉRIAU THERMOPLASTIQUE À CHANGEMENT DE PHASE PCM

(30) Priorität: 13.02.2017 CH 1672017
(43) Veröffentlichungstag der Anmeldung: 15.08.2018
(73) Patentinhaber: Scaloric GmbH, 4623 Neuendorf (CH)
(72) Erfinder: von Arx, Silvan, 4623 Neuendorf (CH)
(74) Vertreter: Keilitz, Wolfgang

(56) Entgegenhaltungen:
- EP-A1- 2 829 202
- EP-A2- 1 224 897
- EP-A2- 1 894 504
- DE-A1- 3 125 463
- DE-U1-202012 101 090
- GB-A- 2 336 899
- US-A- 3 383 880
- US-A- 4 003 426
- US-B1- 7 427 001

## Beschreibung

### Gegenstand und technisches Gebiet

Die Erfindung betrifft einen doppelwandigen Speiseteller welcher im Hohlraum mit einem Phase Change Material (PCM) befüllt ist.

### Stand der Technik

In DE102004025994 A1 werden Latentwärmespeicher für Wandelemente und in DE202005008406 U1 transparente Hohlbausteine mit Latentwärmespeicher behandelt. In Latentwärmespeichern wird der Effekt des Phasenwechsels von PCM zur thermischen Energiespeicherung genutzt. In US4003426 A wird ein Latentwärmetauscher zur Heizung und Kühlung von Gebäuden beschrieben, bei dem ein PCM in eine Polymermatrix eingebunden ist.

Die Schrift DE202007001699 U1 beschreibt die Erfindung von Textilien mit erhöhter Kapazität zur latenten Wärmespeicherung für Bettwaren. Verfahren zur Herstellung solcher Textilfasern werden in DE102008031163 A1 beschrieben. Die Schrift umfasst mit Latentwärmespeichermaterial gefüllte Hohlfaser, Verfahren zu deren Herstellung sowie deren Verwendung.

Die Schrift EP2949422 A1 beschreibt eine Vorrichtung zur Kühlung von Maschinenbauteilen mittels PCM. Das dabei verwendete Kühlmedium ist eine Dispersion welche aus einer wässrigen kontinuierlichen Phase und einer organischen diskontinuierlichen Phase besteht. Die diskontinuierliche Phase besteht aus einem PCM. Mit dem Kühlmedium wird Wärme bei konstanter Temperatur abgeführt und kühlt unter Ausnutzung der latenten Wärme Maschinenbauteile, welche dadurch minimale Temperaturdifferenzen und Temperaturgradienten erfahren und eine höhere Präzision der Fertigung erreichen.

In DE102012212043 A1 wird ein Speiseteller mit integrierter elektrischer Heizung beschrieben. Die Wärmebereitstellung resultiert aus integrierten elektrisch betriebenen Heizelementen. Als Abgrenzung dazu wird hier auf die Wärmebereitstellung hingewiesen, welche durch elektrischen Strom erfolgt. In EP1894504 A2 wird ein doppelwandiger Warmhaltetopf vorgestellt, bei dem ein PCM in einer elektrisch leitenden Struktur, insbesondere einer porösen, nicht elastischen Graphitmatrix, eingebunden ist, welche mittels Induktion erwärmt werden kann.

Ferner ist aus der EP 2 829 202 A1 ein doppelwandiger Speiseteller mit einem Hohlraum bekannt, der wenigstens teilweise mit einem Phase Change Material (PCM) befüllt ist, das durch Phasenumwandlung von fest zu flüssig und von flüssig zu fest, thermische Energie als latente Wärme speichert oder abgibt. Auch die Druckschriften US 3 383 880 A, DE 20 2012 101090 U1, US 7 427 001 B1 und GB 2 336 899 A beschreiben jeweils einen doppelwandigen Speiseteller mit PCM-Füllung. Die DE 31 25 463 A1 schlägt noch vor, einen kompressiblen Feststoff als Druckausgleichskörper in einem Wärmespeicher einzusetzen.

### Darstellung der Erfindung

Die vorliegende Erfindung betrifft einen Speiseteller, in welchem Speisen angerichtet werden und aus dem Menschen unmittelbar essen. Der Speiseteller besitzt die Eigenschaft, Speisen - unter Ausnutzung der latenten Wärme eines Phase Change Material (PCM) - warm zu halten.

Der erfindungsgemäße Speiseteller kann zum Beispiel aus Keramik bestehen, vorzugsweise Porzellan, wobei keramische Massen eine Vielzahl anorganischer Werkstoffe umfassen.

Gemäß einer Ausführungsform der Erfindung ist der Hohlraum neben dem PCM teilweise mit einem Gas befüllt, vorzugsweise Luft, wobei der Volumenanteil des Gases vorzugsweise zwischen 4% und 40% und besonders bevorzugt zwischen 10% und 25% des Gesamtvolumens des Hohlraums beträgt. Der Volumenanteil des Gases kann aber auch andere Werte einnehmen.

Im Hohlraum des Speisetellers kann sich auch wenigstens ein kompressibler Feststoff befinden, der die Volumenausdehnung des PCM von flüssig zu fest und von fest zu flüssig durch Kompression und Expansion kompensiert, wobei der Volumenanteil des Feststoffs vorzugsweise zwischen 4% und 40% und besonders bevorzugt zwischen 10% und 25% des Gesamtvolumens des Hohlraums beträgt. Der Feststoff kann beispielsweise ein geschäumter Kunststoff aus der Gruppe der Elastomere sein. Der Feststoff kann beispielsweise in Form von Granulat, Flocken, Platten oder Folien vorliegen.

Sofern der Speiseteller zum Warmhalten dient, findet der Phasenwechsel des PCM von flüssig nach fest in einem Phasenumwandlungstemperaturbereich von +40°C bis +100°C, vorzugsweise in einem Phasenumwandlungstemperaturbereich von +50°C bis +90°C und besonders bevorzugt in einem Phasenumwandlungstemperaturbereich von +60°C bis +80°C statt.

Sofern der Speiseteller zum Kühlhalten dient, findet der Phasenwechsel des PCM von fest nach flüssig in einem Phasenumwandlungstemperaturbereich von -25°C bis +15°C, vorzugsweise in einem Phasenumwandlungstemperaturbereich von -16°C bis +4°C und besonders bevorzugt in einem Phasenumwandlungstemperaturbereich von -10°C bis -4°C statt.

Das vorstehend genannte PCM umfasst vorzugsweise organische, unpolare Substanzen aus der Klasse der Fettsäuren oder der Fettsäureestern, besonders bevorzugt Myristinsäure, Palmitinsäure, Stearinsäure und Mischungen daraus.

Das PCM kann auch organische, unpolare Substanzen der Klasse der Alkane umfassen, bevorzugt Paraffine und Paraffinmischungen, besonders bevorzugt Octacosan, Triacontan, Dotriacontan und Mischungen daraus.

Alternativ kann das PCM auch organische, unpolare Substanzen der Klasse der Fettalkohole umfassen, bevorzugt Fettalkohole mit 18 bis 30 Kohlenstoffatomen pro Molekül, besonders bevorzugt 1-Eicosanol,1-Docosanol und Mischungen daraus. Gemäß einer weiteren Alternative kann das PCM auch eine Mischung aus Wasser und Alkohol sein, besonders bevorzugte Alkohole sind Ethanol, Propylenglykol, Ethylenglykol und Mischungen daraus.

Gemäß einer speziellen Ausführungsform der Erfindung besteht das PCM im Wesentlichen aus Wasser.

Gemäß einer Ausführungsform der Erfindung besteht das PCM aus einer Mischung aus Salz und Wasser, welche sowohl als Salzlösung oder als Salzhydrat verwendet wird, besonders bevorzugt Natriumacetat-Trihydrat.

Im Hohlraum des Speisetellers ist ein polymergebundenes PCM angeordnet, das beispielsweise als Granulat, Flocken, Platten oder Folien oder als eine Mischung aus einem oder mehreren polymergebundenen PCM vorgesehen sein kann. Außerdem können ein oder mehrere Wärmeträgerfluide vorgesehen sein, welche(s) das Polymergebundene PCM umgibt. Mit polymergebundenem PCM ist gemeint, dass PCM in einer Polymermatrix eingelagert ist. Durch diese Einbindung fliesst dass PCM im flüssigen Zustand nicht aus, sondern bleibt in dieser schwammartigen Polymerstruktur eingeschlossen. Weitere Bezeichnungen für polymergebundene PCM sind PCM-Compound und PCM-Polymercompound. Bei polymergebundenem PCM können beispielsweise bis zu 80% Massenanteile in die Polymermatrix durch kontinuierliche Extrusionsprozesse eingelagert und anschliessend als Granulate, Flocken, Platten und Folien verarbeitet werden.

Der erfindungsgemäße Speiseteller umfasst vorzugsweise eine oder mehrere Öffnungen zum Befüllen des Speisetellers mit dem PCM. Zum Verschließen der Öffnung(en) ist vorzugsweise wenigstens ein Stöpsel vorgesehen.

### Aufzählung der Zeichnungen

Die Erfindung wird anhand eines Ausführungsbeispiels, welches in den Zeichnungen dargestellt ist, näher erläutert. Es zeigt:

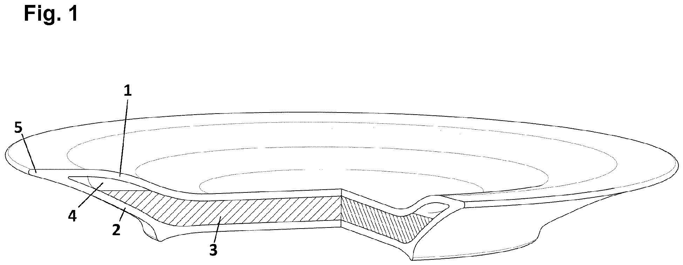

Abb. 1: Einen doppelwandigen Speiseteller mit PCM, Dreidimensionale Schnittzeichnung

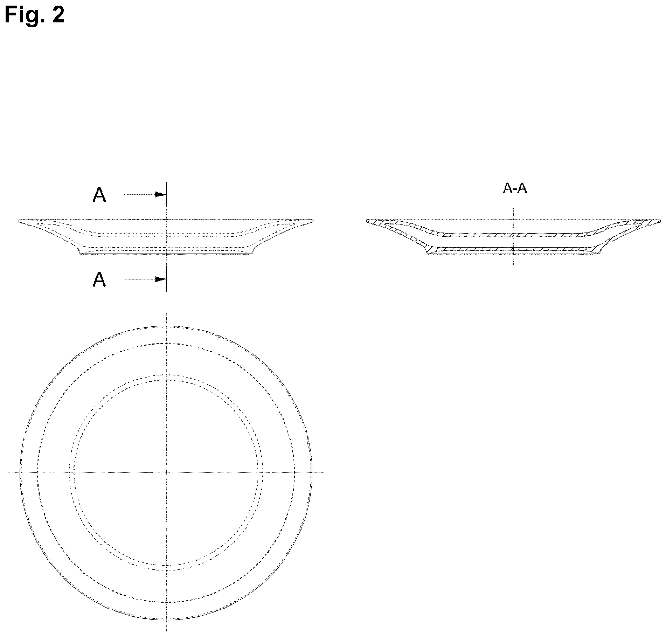

Abb. 2: Den doppelwandigen Speiseteller von Abb. 1 ohne PCM, Normalprojektion

### Ausführung der Erfindung

Der Speiseteller ist ein doppelwandiges Gefäss aus Keramik, hat demnach eine Aussenwand 2 und eine Innenwand 1, wobei zwischen Innenwandinnenfläche und Aussenwandinnenfläche ein Hohlraum vorgesehen ist, und einen Verbindungsbereich 5, welcher die Aussenwand mit der Innenwand verbindet. Der Hohlraum ist mit mindestens einem PCM 3 befüllt. Zudem enthält der Hohlraum ein Gaspolster 4 welches als Expansionselement dient und die Dichtedifferenz der Phasenumwandlung des PCM von flüssig zu fest und von fest zu flüssig ausgleicht.

Das im Hohlraum enthaltene PCM wechselt seinen Aggregatszustand von flüssig zu fest bei Verweilen auf einer tieferen Temperatur als die der Phasenumwandlungstemperatur. Umgekehrt wechselt das im Hohlraum enthaltene PCM seinen Aggregatszustand von fest zu flüssig bei Verweilen auf einer höheren Temperatur als die der Phasenumwandlungstemperatur.

Durch wechseln des Aggregatszustandes wird die latente Wärme (gespeicherte Phasenumwandlungsenthalpie) von flüssig zu fest ausgenutzt um Speisen warmzuhalten.

Es ist allgemein bekannt, dass der Effekt des Warmhaltens von Speisen üblicherweise mit vorgewärmten Tellern realisiert wird. Dabei wird die sensible «fühlbare» Wärme genutzt. Der sensible Temperaturverlauf ist exponentiell stark abfallend und durchläuft schnell die zum Verzehr geeignete optimale Temperatur. Durch den Einsatz von Phase Change Material kann zusätzliche thermische Energie als latente «versteckte» Wärme gespeichert und auf dem durch das jeweilige PCM definierte Temperaturniveau wieder freigesetzt werden. Damit lässt sich ein Teller eine bestimmte Zeit auf einer konstanten Temperatur halten. Die Speisen können dadurch auf dem dafür vorgesehenen optimalen Temperaturniveau genossen werden.

Die Erfindung vereinigt den Vorteil, dass Speisen wesentlich länger und auf konstantem Temperaturniveau warm gehalten werden. Damit resultiert ein vollkommen neues Geschmackserlebnis bis zum letzten Biss.

Durch variieren des PCM können auch Teller hergestellt werden um Speisen kalt zu halten.

## Patentansprüche

1. Doppelwandiger Speiseteller (1) mit einem Hohlraum,
der wenigstens teilweise mit einem Phase Change Material (PCM) (3) befüllt ist, das durch Phasenumwandlung von fest zu flüssig und von flüssig zu fest, thermische Energie als latente Wärme speichert oder abgibt
**dadurch gekennzeichnet, dass**
im Hohlraum eine schwammartige Polymerstruktur vorgesehen ist, in der das Phase Change Material (3) eingeschlossen ist.

2. Speiseteller nach Anspruch 1, **dadurch gekennzeichnet, dass** der Speiseteller aus Keramik, Metall, Glas oder Kunststoff hergestellt ist.

3. Speiseteller nach Anspruch 1 oder 2, **dadurch gekennzeichnet, dass** der Hohlraum neben dem PCM-Material (3) auch mit einem Gas (4), vorzugsweise Luft, befüllt ist, wobei der Volumenanteil des Gases (4) vorzugsweise zwischen 4% und 40%, besonders bevorzugt zwischen 10% und 25% des Gesamtvolumens des Hohlraums beträgt.

4. Speiseteller nach einem der Ansprüche 1 bis 3, **dadurch gekennzeichnet, dass** das PCM (3) zum Warmhalten dient und ein Phasenwechsel des PCM (3) von flüssig nach fest in einem Phasenumwandlungstemperaturbereich von +40°C bis +100°C, vorzugsweise in einem Phasenumwandlungstemperaturbereich von +50°C bis +90°C, besonders bevorzugt in einem Phasenumwandlungstemperaturbereich von +60°C bis +80°C stattfindet.

5. Speiseteller nach einem der Ansprüche 1 bis 3, **dadurch gekennzeichnet, dass** das PCM (3) zum Kühlen dient und ein Phasenwechsel des PCM (3) von fest nach flüssig in einem Phasenumwandlungstemperaturbereich von -25°C bis +15°C, vorzugsweise in einem Phasenumwandlungstemperaturbereich von -16°C bis +4°C, besonders bevorzugt in einem Phasenumwandlungstemperaturbereich von -10°C bis -4°C stattfindet.

6. Speiseteller nach einem der Ansprüche 1 bis 5, **dadurch gekennzeichnet, dass** das PCM (3) organische, unpolare Substanzen aus der Klasse der Fettsäuren oder der Fettsäureestern umfasst, besonders bevorzugt Myristinsäure, Palmitinsäure, Stearinsäure und Mischungen daraus.

7. Speiseteller nach einem der Ansprüche 1 bis 5, **dadurch gekennzeichnet, dass** das PCM (3) organische, unpolare Substanzen der Klasse der Alkane umfasst, bevorzugt Paraffine und Paraffinmischungen, besonders bevorzugt Octacosan, Triacontan, Dotriacontan und Mischungen daraus.

8. Speiseteller nach einem der Ansprüche 1 bis 5, **dadurch gekennzeichnet, dass** das PCM (3) organische, unpolare Substanzen der Klasse der Fettalkohole umfasst, bevorzugt Fettalkohole mit 18 bis 30 Kohlenstoffatomen pro Molekül, besonders bevorzugt 1-Eicosanol,1-Docosanol und Mischungen daraus.

9. Speiseteller nach einem der Ansprüche 1 bis 5, **dadurch gekennzeichnet, dass** das PCM (3) eine Mischung aus Wasser und Alkohol ist, besonders bevorzugte Alkohole sind Ethanol, Propylenglykol, Ethylenglykol und Mischungen daraus.

10. Speiseteller nach einem der Ansprüche 1 bis 5, **dadurch gekennzeichnet, dass** das PCM (3) im Wesentlichen aus Wasser besteht.

11. Speiseteller nach einem der Ansprüche 1 bis 5, **dadurch gekennzeichnet, dass** das PCM (3) aus einer Mischung aus Salz und Wasser besteht, welche sowohl als Salzlösung oder als Salzhydrat verwendet wird, besonders bevorzugt Natriumacetat-Trihydrat.

12. Speiseteller nach einem der vorhergehenden Ansprüche, **dadurch gekennzeichnet, dass** der Teller eine oder mehrere Öffnungen zum Befüllen des PCM (3) aufweist, welche durch einen oder mehrere Stöpsel dicht verschließbar sind.

## Claims

1. Double-walled dinner plate (1) having a cavity which is at least partially filled with a phase change material (PCM) (3) that stores or radiates thermal energy as latent heat by phase transformation from a solid to a liquid state or from a liquid to a solid state, **characterized in that**
a sponge-like polymer structure is provided in the cavity, in which the phase change material (3) is enclosed.

2. Dinner plate according to claim 1, **characterized in that** the dinner plate is made of ceramic, metal, glass or plastic.

3. Dinner plate according to claim 1 or 2, **characterized in that** the cavity is filled with a gas (4), preferably air, in addition to the PCM material (3), the volume fraction of the gas (4) preferably being between 4% and 40% and in particular between 10% and 25% of the total volume of the cavity.

4. Dinner plate according to one of claims 1 to 3, **characterized in that** the PCM (3) is used to keep warm, and a phase change of the PCM (3) from a liquid to a solid state takes place in a phase transition temperature range of + 40 °C to + 100 °C, preferably in a phase transition temperature range from + 50 °C to + 90 °C and in particular in a phase transition temperature range from + 60 °C to + 80 °C.

5. Dinner plate according to one of claims 1 to 3, **characterized in that** the PCM (3) is used for cooling, and a phase change of the PCM (3) from a solid to liquid state takes place in a phase transition temperature range of -25 °C to + 15 °C, preferably in one phase transition temperature range from -16 °C to + 4 °C and in particular in a phase transition temperature range from -10 °C to -4 °C.

6. Dinner plate according to one of claims 1 to 5, **characterized in that** the PCM (3) comprises organic, non-polar substances from the class of fatty acids or fatty acid esters, preferably myristic acid, palmitic acid, stearic acid and mixtures thereof.

7. Dinner plate according to one of claims 1 to 5, **characterized in that** the PCM (3) comprises organic, non-polar substances of the alkane class, preferably paraffins and paraffin mixtures, in particular octacosane, triacontane, dotriacontane and mixtures thereof.

8. Dinner plate according to one of claims 1 to 5, **characterized in that** the PCM (3) comprises organic, non-polar substances of the class of fatty alcohols, preferably fatty alcohols with 18 to 30 carbon atoms per molecule, in particular 1-eicosanol, 1-docosanol and mixtures thereof.

9. Dinner plate according to one of Claims 1 to 5, **characterized in that** the PCM (3) is a mixture of water and alcohol, wherein preferred alcohols are ethanol, propylene glycol, ethylene glycol and mixtures thereof.

10. Dinner plate according to one of Claims 1 to 5, **characterized in that** the PCM (3) essentially consists of water.

11. Dinner plate according to one of Claims 1 to 5, **characterized in that** the PCM (3) comprises a mixture of salt and water, which is used both as a salt solution or as a salt hydrate, in particular sodium acetate trihydrate.

12. Dinner plate according to one of the preceding claims, **characterized in that** the plate has one or more openings for filling the PCM (3) which can be tightly closed by one or more plugs.

## Revendications

1. Assiette à double paroi (1) présentant une cavité remplie au moins en partie d'un matériau à changement de phase (MCP) (3) qui, sous l'effet d'un changement de phase de solide à liquide et de liquide à solide, emmagasine ou dégage de l'énergie sous la forme de chaleur latente,
**caractérisée en ce que**
la cavité renferme une structure polymère de type spongieuse dans laquelle est inclus le matériau à changement de phase (3).

2. Assiette selon la revendication 1, **caractérisée en ce qu'**elle est réalisée en céramique, métal, verre ou matière plastique.

3. Assiette selon la revendication 1 ou 2, **caractérisée en ce que** la cavité est remplie d'un gaz (4), de préférence de l'air, en sus du MCP (3), la part volumique dudit gaz (4) étant de préférence comprise entre 4 % et 40 %, et plus préférablement entre 10 % et 25 %, du volume total de la cavité.

4. Assiette selon l'une des revendications 1 à 3, **caractérisée en ce que** le MCP (3) sert au maintien au chaud et **en ce qu'**un changement de phase du MCP (3) de liquide à solide se produit dans une plage de températures de changement de phase allant de +40 °C à +100 °C, de préférence dans une plage de températures de changement de phase allant de +50 °C à +90 °C, et plus préférablement dans une plage de températures de changement de phase allant de +60 °C à +80 °C.

5. Assiette selon l'une des revendications 1 à 3, **caractérisée en ce que** le MCP (3) sert au maintien au froid et **en ce qu'**un changement de phase du MCP (3) de solide à liquide se produit dans une plage de températures de changement de phase allant de -25 °C à +15 °C, de préférence dans une plage de températures de changement de phase allant de -16 °C à +4 °C, et plus préférablement dans une plage de températures de changement de phase allant de - 10°C à -4°C.

6. Assiette selon l'une des revendications 1 à 5, **caractérisée en ce que** le MCP (3) comprend des substances organiques non polaires de la classe des acides gras ou des esters d'acides gras, de préférence l'acide myristique, l'acide palmitique, l'acide stéarique et des mélanges de ceux-ci.

7. Assiette selon l'une des revendications 1 à 5, **caractérisée en ce que** le MCP (3) comprend des substances organiques non polaires de la classe des alcanes, de préférence des paraffines et mélanges de paraffines, et plus préférablement l'octacosane, la triacontane, la dotriacontane et des mélanges de ceux-ci.

8. Assiette selon l'une des revendications 1 à 5, **caractérisée en ce que** le MCP (3) comprend des substances organiques non polaires de la classe des alcools gras, de préférence des alcools gras comprenant 18 à 30 atomes de carbone par molécule, et plus préférablement le 1-eicosanol, le 1-docosanol et des mélanges de ceux-ci.

9. Assiette selon l'une des revendications 1 à 5, **caractérisée en ce que** le MCP (3) est un mélange d'eau et d'alcool, des alcools particulièrement préférés étant l'éthanol, le propylène glycol, l'éthylène glycol et des mélanges de ceux-ci.

10. Assiette selon l'une des revendications 1 à 5, **caractérisée en ce que** le MCP (3) se compose essentiellement d'eau.

11. Assiette selon l'une des revendications 1 à 5, **caractérisée en ce que** le MCP (3) se compose d'un mélange de sel et d'eau utilisé en tant que solution saline ou hydrate de sel, de préférence de l'acétate de sodium trihydraté.

12. Assiette selon l'une quelconque des revendications précédentes, **caractérisée en ce qu'**elle présente une ou plusieurs ouvertures destinées à l'introduction du MCP (3) et pouvant être bouchées hermétiquement par un ou plusieurs bouchons.
